# EUROPÄISCHE PATENTANMELDUNG

(11) **EP 2 234 245 A2**
(43) Veröffentlichungstag der Anmeldung: **29.09.2010**
(21) Anmeldenummer: 10003203.6
(22) Anmeldetag: 25.03.2010
(51) Int. Cl.: H02K 7/106

(54) **Antriebsvorrichtung mit Motorbremse**

(30) Priorität: 25.03.2009 DE 102009014308
(71) Anmelder: Gerhard Geiger GmbH & Co., 74321 Bietigheim-Bissingen (DE)
(72) Erfinder: Dangel, Hans-Michael, 74391 Erligheim (DE)
(74) Vertreter: Jeck, Anton

(57) **Zusammenfassung**

Die Erfindung betrifft eine elektrische Antriebsvorrichtung mit einer Motorbremse, die aus einem Stator mit einer ein elektromagnetisches Feld erzeugenden Feldwicklung, aus einem auf einer Motorwelle angeordneten Rotor, der im stromlosen Zustand der Feldwicklung gebremst wird, aus einem Flussumlenkteil, einem Anzugskörper und einem Bremsbelag auf einem Bremsbelagträger besteht, insbesondere für den Antrieb einer Wickelwelle eines Rollladens, einer Markise, einer Jalousie oder dergleichen. Die Erfindung besteht darin, dass das Flussumlenkteil vom Rotor gelöst und drehfest an einem stillstehenden Antriebsteil angebracht ist. Dadurch kann eine im Wesentlichen konstant hohe Anzugskraft zwischen Flussumlenkteil und Anzugskörper gewonnen werden, die vom Motorbelastungszustand unabhängig ist, die Motorleistung nur geringfügig schwächt und das Bewegungsgeräusch der Bremse verringert. Das Flussumlenkteil ist vorzugsweise als Topf ausgebildet, dessen Topfwand und Topfboden vor der Montage getrennt sind.

## Beschreibung

Die Erfindung betrifft eine elektrische Antriebsvorrichtung mit einer Motorbremse nach dem Oberbegriff des Anspruchs 1.

Bei den bekannten Einphasen-Asynchronmotoren wird im Stator ein Drehfeld erzeugt, das den als Kurzschlussläufer bzw. Käfigläufer ausgebildeten Rotor mit einem lastabhängigen Schlupf antreibt. Der Rotor besteht aus einem genuteten Blechpaket mit einer zentralen Bohrung, in der eine drehbar gelagerte Motorwelle eingepresst ist. In den einzelnen Nuten befinden sich Leiter, die an beiden stirnseitigen Enden des Rotors über so genannte Kurzschlussringe miteinander verbunden sind. An einem Ende des Rotorblechpakets schließt sich unmittelbar ein Flussumlenkteil an, das eine Ausnehmung für den Kurzschlussring aufweist. Das andere Ende des Flussumlenkteils ist mit einer Planfläche versehen.

Leiter und Kurzschlussringe (Käfig) bestehen aus nichtmagnetischem, elektrisch leitenden Material, beispielsweise aus Aluminium, und entstehen dadurch, dass das Blechpaket mit Aluminium vergossen wird.

Das Flussumlenkteil besteht aus ferromagnetischem Material, beispielsweise Weicheisen, und wird zusammen mit dem Rotor mit Aluminium vergossen, so dass eine kompakte, feste Rotoreinheit entsteht. Das Flussumlenkteil lenkt einen Teil des elektromagnetischen Statorfelds derart um, dass ein axial benachbarter, ebenfalls mit einer Planfläche versehener, drehfest, aber axial auf der rotierenden Motorwelle verschiebbarer Anzugskörper gegen eine Federkraft magnetisch angezogen wird, wenn durch den Stator Strom fließt.

Der Anzugskörper besteht ebenfalls aus ferromagnetischem Material. Er ist auf der vom Flussumlenkteil abgewandten Seite mit einer Bremsfläche versehen, die im stromlosen Statorzustand mittels einer Bremsfeder axial gegen einen feststehenden Bremsbelag drückt und damit den Motor bremst.

Die geometrische Gestaltung des Flussumlenkteils hat einen entscheidenden Einfluss auf die Größe der magnetischen Anzugskraft. Das Flussumlenkteil besteht in optimaler Weise aus mehreren ferromagnetischen Kreisringsegmenten, die durch nichtmagnetisches Material, beispielsweise Aluminium, voneinander vollständig getrennt sind. Weiter muss beachtet werden, dass die Segmente so dimensioniert werden, dass das Segmentmaterial nicht gesättigt wird, da sonst das zur Verfügung stehende, elektromagnetische Feld nicht vollständig umgelenkt werden kann.

Die Länge des Statorblechpakets ist gleich der Summe aus der Länge des Rotorblechpakets und der Länge des Flussumlenkteils. Durch ein längeres Flussumlenkteil kann auch eine größere, magnetische Anzugskraft gewonnen werden, weil ein größerer Statorfelsteil umgelenkt wird. Nachteilig ist die dadurch geringere Motorleistung, da das Rotorblechpaket um denselben Betrag kürzer wird.

Die Bremsfeder muss derart bemessen werden, dass die durch das Flussumlenkteil erzeugte, magnetische Anzugskraft in jedem Motorbetriebszustand größer als die Bremsfederkraft ist, die den Anzugskörper mit der Bremsfläche gegen den feststehenden Bremsbelag drückt. Anderenfalls würde die Bremse beim Anlaufen des Motors nicht sauber öffnen bzw. würde während des Motorlaufs flattern oder schließen, wodurch es zu Geräuschen und Fehlfunktionen des Motors kommt. Andererseits muss die Bremsfederkraft mindestens so groß sein, dass das geforderte Bremsmoment des Motors gewonnen wird.

Nachteilig bei diesen bekannten Lösungen ist, dass die magnetische Anzugskraft des Flussumlenkteils vom Belastungszustand, von der Höhe der Phasenströme, vom zugehörigen Phasenwinkel und vom Motorschlupf abhängig ist. Die magnetische Anzugskraft des Flussumlenkteils ist beim Motoranlauf am größten und sinkt bei geringerer Belastung.

Daher ist die magnetische Anzugskraft beim Antriebsanlauf am höchsten, weil dann der Rotor noch steht, das Statorfeld aber sofort mit Netzfrequenz, beispielsweise 50Hz bzw. 3000min⁻¹, läuft und damit der Schlupf maximal ist. Mit geringer werdender Belastung läuft der Rotor zunehmend synchron, also mit geringerem Schlupf zum Statorfeld, wodurch die magnetische Anzugskraft sinkt. Ein derartiger Belastungszustand kann beispielsweise beim Herunterlassen einer Jalousie auftreten, weil in diesem Fall die Gewichtskraft der Jalousie den Motor entlastet und nicht belastet. Nachteilig bei dem gerade beschriebenen, schlechtesten Fall ist, dass die Bremsfederkraft derart ausgelegt sein muss, dass die Bremse in jedem Belastungszustand des laufenden Motors sicher geöffnet bleibt.

Das beschriebene, bekannte Bremssystem hat grundsätzlich den Nachteil, dass das Öffnen und Schließen der Bremse ruckartig erfolgt und damit zu störenden Geräuschen führt. Eine zur Geräuschverminderung vorgesehene Bewegungsdämpfung ist im sich schnell drehenden und thermisch stark belasteten Rotor aufgrund der beengten Anordnung schwierig.

Die Aufgabe der Erfindung besteht darin, bei einer Antriebsvorrichtung der im Oberbegriff des Anspruchs 1 genannten Art eine im Wesentlichen konstant hohe Anzugskraft zwischen Flussumlenkteil und Anzugskörper zu gewinnen, die vom Motorbelastungszustand unabhängig ist, die Motorleistung nur geringfügig schwächt und das Bewegungsgeräusch der Bremse verringert.

Diese Aufgabe wird mit den Merkmalen des Anspruchs 1 gelöst.

Man erkennt, dass die Erfindung jedenfalls dann verwirklicht ist, wenn es sich um eine Antriebsvorrichtung mit einer Motorbremse handelt, die einen Stator mit einer Feldwicklung, einen auf einer Motorwelle angeordneten Rotor, der im stromlosen Zustand der Feldwicklung gebremst wird, mindestens ein Flussumlenkteil, einen Anzugskörper sowie einen Bremsbelag auf einen Bremsbelagträger aufweist. Dabei ist das Flussumlenkteil vom Rotor gelöst und drehfest an einem stillstehenden Antriebsteil angebracht.

Das Flussumlenkteil ist damit nicht mehr am umlaufenden Rotor, sondern an einem stillstehenden Teil des Antriebs angebracht. Das nun ständig stillstehende Flussumlenkteil hat nun in jedem Motorbelastungszustand einen maximalen Schlupf bezüglich des umlaufenden Statorfelds und übt damit eine im Wesentlichen konstante, maximal Anzugskraft aus. Im Gegensatz zu den bekannten Antriebsvorrichtungen ergeben sich bei gleicher Flussumlenkteillänge wesentlich höhere Anzugskräfte. Im Umkehrschluss kann durch die Erfindung bei gleichbleibender Anzugskraft das Flussumlenkteil wesentlich kürzer gestattet werden.

Gemäß einer weiteren Ausbildung der Erfindung ist das Flussumlenkteil am Stator oder nahe des Stators angebracht. Dadurch bleibt die Länge der Antriebsvorrichtung in Grenzen.

Gemäß einer zweckmäßigen, weiteren Ausbildung der Erfindung ist das Flussumlenkteil ganz innerhalb oder teilweise innerhalb des Statorendes oder zumindest unmittelbar benachbart zum Statorende axial derart positioniert, dass es noch ausreichend vom Statorfeld durchflossen wird, um die gewünschte Anzugskraft zu erzeugen.

Gemäß einer vorteilhaften, weiteren Ausbildung der Erfindung weist das Flussumlenkteil die Form eines Topfes auf.

Gemäß einer weiteren Ausbildung der Erfindung ist das Flussumlenkteil im Stator integriert, so dass ein einheitliches Bauteil mit dem Stator gebildet ist. Dadurch wird die Montage vereinfacht. Unabhängig davon, ob das Flussumlenkteil in bekannter Weise umläuft oder gemäß der Erfindung stillsteht, haben die vorbeschriebenen, geometrischen und materialtechnischen Voraussetzungen für eine optimale Flussumlenkung Gültigkeit. Vorteilhafterweise ist die Anzahl der Statorzähne gleich der Anzahl von Segmenten des Flussumlenkteils, die in radialer Verlängerung der Statorzähne liegen sollten und bestenfalls direkten, metallischen Kontakt zueinander aufweisen. Die Segmente können nun beispielsweise mit Kunststoff umspritzt werden, da die Segmente des Flussumlenkteils nun nicht mehr zusammen mit dem Rotor mit Aluminium vergossen werden müssen. Ein solches umspritztes Kunststoffteil bietet konstruktiv zahlreiche vorteilhafte Möglichkeiten, im Stator befestigt zu werden.

Das nun stillstehende Flussumlenkteil bedingt eine zur bekannten Bremsanordnung gerade umgekehrte Anordnung in Bezug auf die drehenden und stillstehenden Bauteile.

Gemäß einer vorteilhaften, weiteren Ausbildung der Erfindung ist der Bremsbelagträger mit der Motorwelle fest verbunden.

Eine vorteilhafte, weitere Ausbildung der Erfindung ist so getroffen, dass der Anzugskörper drehfest um die Motorwelle im Topf des Flussumlenkteils, aber axial verschiebbar angeordnet ist und dass eine um die Motorwelle angeordnete, im Anzugskörper aufgenommene Bremsfeder den Anzugskörper nach dem Abschalten des Statormagnetfelds vom Flussumlenkteil abdrückt und damit einen fest mit dem Anzugskörper verbundenen Bremskörper auf den Bremsbelag drückt. Der nicht rotierende Bremskörper bewegt sich in axialer Richtung zwischen geschlossener und geöffneter Bremse nur wenige Zehntel Millimeter.

Gemäß einer vorteilhaften, weiteren Ausbildung der Erfindung weist dass der Topf des Flussumlenkteils um seine Innenwand verteilte, in Motorlängsrichtung laufende Führungsrippen auf, und der Anzugskörper und der Bremskörper sind mit entsprechenden Führungsnuten versehen.

Um die Geräuschbildung zu verringern, muss diese Bewegung in beiden Richtungen gedämpft werden. Durch das stillstehende Flussumlenkteil sind hier einfachere Anordnungen als beim Stand der Technik denkbar.

Gemäß einer vorteilhaften, weiteren Ausbildung der Erfindung ist daher der Bremskörper mit einem Dämpfungssystem versehen, das die durch die Bremsfeder beim Bremsvorgang erzeugte, schnelle Bewegung des Bremskörpers in Richtung Bremsbelag und Bremsteil verlangsamt. Damit wird ein harter Aufprall und das hiermit verbundene Geräusch abgeschwächt oder ganz vermieden. Bei geschlossener Bremse darf das Dämpfungssystem die Anpresskraft der Bremsfeder nicht abschwächen. Um auch bei unterschiedlichen Betriebsbedingungen ein konstantes Bremsverhalten zu erreichen, muss das Dämpfungssystem in weiten Grenzen gegenüber Temperaturänderungen unempfindlich sein.

Besonders einfach kann ein solches Dämpfungssystem gemäß einer weiteren Ausbildung der Erfindung dadurch erreicht werden, dass zwischen den Führungsnuten des Bremskörpers und den Führungsrippen Silikonfett oder dergl. eingebracht ist.

Ebenso denkbar sind Fluiddämpfungssysteme, bei denen während der axialen Bewegung des Bremskörpers ein Fluid, beispielsweise Öl, von einer ersten Kammer durch ein kleine Öffnung in eine zweite Kammer gedrückt wird. Die beim Durchfluss durch die Öffnung erzeugte Fluidreibung wirkt der Bewegung des Bremskörpers entgegen.

Es können beispielsweise auch viskoelastische Schaumstoffe oder dergl. verwendet werden.

Gemäß einer vorteilhaften, weiteren Ausbildung der Erfindung drückt der Bremskörper mittels einer ersten Bremsfläche den Bremsbelag auf eine zweite Bremsfläche eines an der Antriebsvorrichtung festsitzenden Bremsteils,

Gemäß einer weiteren Ausbildung der Erfindung ist der Bremsbelag einteilig oder mehrteilig auf dem Bremsbelagträger schwimmend gelagert. Dadurch wird ein Bremsen auf beiden Seiten des Bremsbelags möglich.

Eine vorteilhafte, weitere Ausbildung der Erfindung ist so getroffen, dass der Bremsbelag als Ring ausgebildet ist und vom Ringinnenumfang ausgehende, auf dem Ringinnenumfang verteilte Ausnehmungen aufweist und dass der Bremsbelagträger mit zu den Ausnehmungen komplementäre Lappen versehen ist, die in die Ausnehmungen eingreifen, so dass der Bremsbelag schwimmend gelagert ist.

Gemäß einer vorteilhaften, weiteren Ausbildung der Erfindung ist ein nach einem der Ansprüche der Erfindung ausgebildetes Flussumlenkteil mit Motorbremse auch am anderen Rotorende vorgesehen.

Die Erfindung bezieht sich auch auf ein Flussumlenkteil für eine elektrische Antriebsvorrichtung nach einem der Ansprüche 1 bis 13.

Schließlich bezieht sich die Erfindung auch auf ein Flussumlenkteil für eine elektrische Antriebsvorrichtung mit einem Stator, einem auf einer Motorwelle angeordneten Rotor und einem Anzugskörper, wobei das den Anzugskörper mittels des Statorfelds anziehende Flussumlenkteil vom Rotor gelöst und drehfest an einem stillstehenden Antriebsteil angebracht ist. Der bewegliche Anzugskörper kann dabei auch für andere Zwecke als für die Motorbremse verwendet werden, beispielsweise als Steuerschalter.

Die Erfindung wird nun anhand von Ausführungsbeispielen näher erläutert. Die nachfolgend beschriebene Antriebsvorrichtung verwendet eine Doppelscheibenbremse und ist nicht einschränkend zu sehen. Es könnten auch Ein- oder Mehrscheibenbremssysteme, Konusbremssysteme, Trommelbremssysteme oder dergleichen eingesetzt werden. Jedes Bremssystem, das eine axiale Stellbewegung direkt oder mittels Umlenkung in eine andere Bewegungsrichtung zur Bremsung benötigt, ist möglich. Es zeigen:
- Fig. 1: einen Längsschnitt durch eine komplette Antriebsvorrichtung mit einem Stator, einem Rotor, einem feststehenden, einstückigen Flussumlenk- teil und einer zugehörigen Bremseinheit gemäß der Erfindung,
- Fig. 2: einen Längsschnitt durch den in Fig. 1 gezeigten Stator mit stillstehen- dem Flussumlenkteil,
- Fig. 3: eine perspektivische Ansicht des Schnitts durch das stillstehende Flussumlenkteil der Fig. 2,
- Fig. 4: eine perspektivische Ansicht des ganzen, in Fig. 2 gezeigten Flussum- lenkteils,
- Fig. 5: einen Längsschnitt durch das Flussumlenkteil der Fig. 4,
- Fig. 6: einen vergrößerten Schnitt durch das in Fig. 3 gezeigte Flussumlenk- teil,
- Fig.7: einen Längsschnitt durch Motorwelle, Rotor, Flussumlenkteil und Bremseinheit der in Fig. 1 gezeigten Antriebsvorrichtung,
- Fig. 8: eine perspektivische Ansicht der Anordnung der Fig. 7,
- Fig. 9: eine perspektivische Ansicht des geschnittenen Flussumlenkteils und der geschnittenen Bremseinheit der Fig. 8 aus einer anderen Perspek- tive,
- Fig. 10: eine vergrößerte, perspektivische Ansicht der geschnittenen Bremsein- heit der Fig. 8,
- Fig. 11: die Fig. 10 aus einer anderen Perspektive,
- Fig. 12: eine vergrößerte, perspektivische Ansicht der axial verschiebbaren Bremseinheit der Fig. 8,
- Fig. 13: eine vergrößerte, perspektivische Ansicht des Bremsbelagträgers und des ringförmigem Bremsbelags der Fig. 8,
- Fig. 14: eine perspektivische Ansicht des Bremsbelagträgers der Fig. 13,
- Fig. 15: eine perspektivische Ansicht des ringförmigen Bremsbelags der Fig. 13,
- Fig. 16: einen Längsschnitt durch eine komplette Antriebsvorrichtung mit einem Stator, einem Rotor, einem feststehenden, Flussumlenkteil und einer zugehörigen Bremseinheit gemäß der Erfindung, wobei das Flussum- lenkteil aus einem Topf besteht, dessen Topfwand und Topfboden ge- trennte Teile sind,
- Fig. 17: eine perspektivische Ansicht des in Fig. 16 gezeigten Topfbodens,
- Fig. 18: eine perspektivische Ansicht der in Fig. 16 gezeigten Topfwand mit Topfrand und
- Fig. 19: eine perspektivische Ansicht des Längsschnitts durch den in Fig. 16 gezeigten Stator mit zweiteiligem Flussumlenkteil.

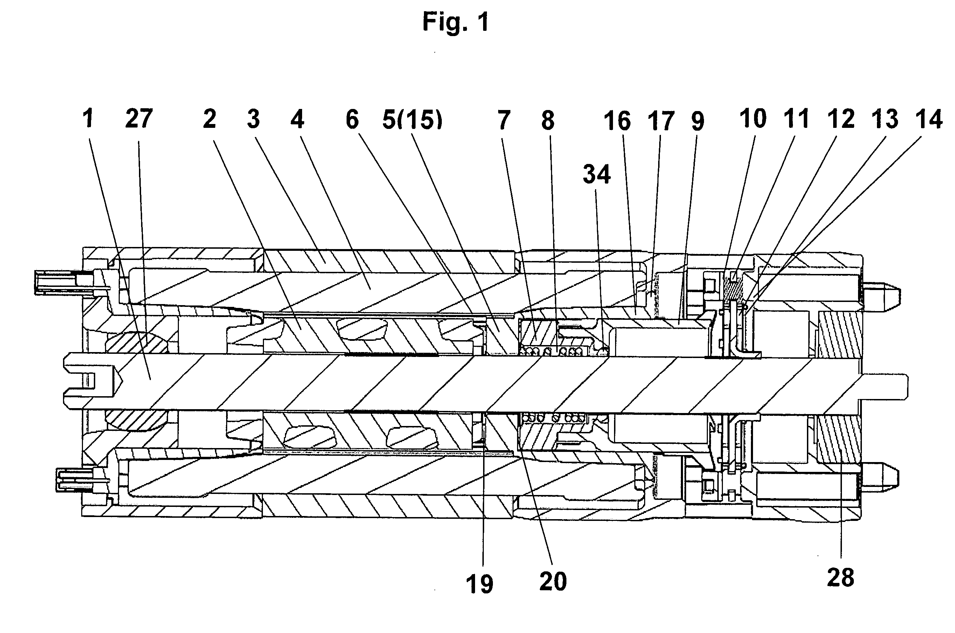

Die Antriebsvorrichtung in Fig. 1 besteht aus einer in Lagern 27, 28 gelagerte Motorwelle 1, einem auf dieser Motorwelle befestigten Rotor 2, einem um den Rotor angeordneten Stator 3, der mit einer Wicklung 4 versehen ist, einem am Stator befestigten, die Motorwelle 1 umschließenden, aber nicht berührenden Flussumlenkteil 5 an einem Ende 6 des Rotors 2, einem die Motorwelle 1 umschließenden, aber diese nicht berührenden, axial verschiebbaren und mit dem Flussumlenkteil 5 koppelbaren Anzugskörper 7, einer auf der Motorwelle 1 angeordneten, sich am Flussumlenkteil 5 abstützenden und auf den Anzugskörper 7 einwirkenden Schraubenfeder 8 und einer Bremseinheit, die durch einen durch den Anzugskörper 7 geführten, die Motorwelle umschließenden Bremskörper 9 mit einer ersten Bremsfläche 10, durch einen Bremsbelag 11 und einen diesen tragenden Bremsbelagträger 12, der auf der Motorwelle 1 befestigt ist, und durch ein feststehendes, eine zweite Bremsfläche 13 aufweisendes Bremsteil 14 gebildet ist. Dabei befindet sich der Bremsbelag 11 zwischen der ersten Bremsfläche 10 und der zweiten Bremsfläche 13. Der Bremskörper 9 ist fest mit dem Anzugskörper 7 über eine Rastverbindung 34 verbunden.

Das Flussumlenkteil 5 ist mittels Form- und/oder Reibschluss im Stator 3 fest integriert, so dass es nicht mit dem Rotor 2 mitläuft. Es sind aber auch andere Lösungen zur Befestigung des Flussumlenkteil 5 am Stator 3 möglich, beispielsweise kann das Flussumlenkteil 5 am Stator 3 angeklebt oder mit Kunststoff oder einem anderen, nichtleitenden Material in den Stator 3 eingegossen werden. Das Flussumlenkteil 5 wird direkt am Statorblechpaket, an den Abdeckkappen des Stators oder an jeder sonstigen, geeigneten Stelle befestigt.

Das beim Einschalten der Wicklung 4 erzeugte magnetische Feld durchdringt neben den Rotor 2 auch das Flussumlenkteil 5, das den Fluss derart umlenkt, dass eine Anzugskraft erzeugt wird. Diese Anzugskraft wirkt auf den Anzugskörper 7 ein und zieht diesen zum Flussumlenkteil 5 an. Der Anzugskörper 7 nimmt den Bremskörper 9 mit, so dass die erste Bremsfläche 10 vom Bremsbelag 11 gelöst wird. Damit kann sich die Motorwelle 1 mit dem Rotor 2 frei drehen.

Andererseits wird beim Ausschalten der Wicklung 4 die Magnetisierung des Flussumlenkteils 5 aufgehoben, so dass durch die Federkraft der Schraubenfeder 8 der Anzugskörper 7 vom Flussumlenkteil 5 abgedrückt wird und damit auch der Bremskörper 9 den Bremsbelag 11 kontaktiert. Der Bremskörper 9 drückt den Bremsbelag 11 auch auf die zweite Bremsfläche 13 des Bremsteils 14. Dadurch werden Motorwelle 1 und Rotor 2 sofort am Drehen gehindert.

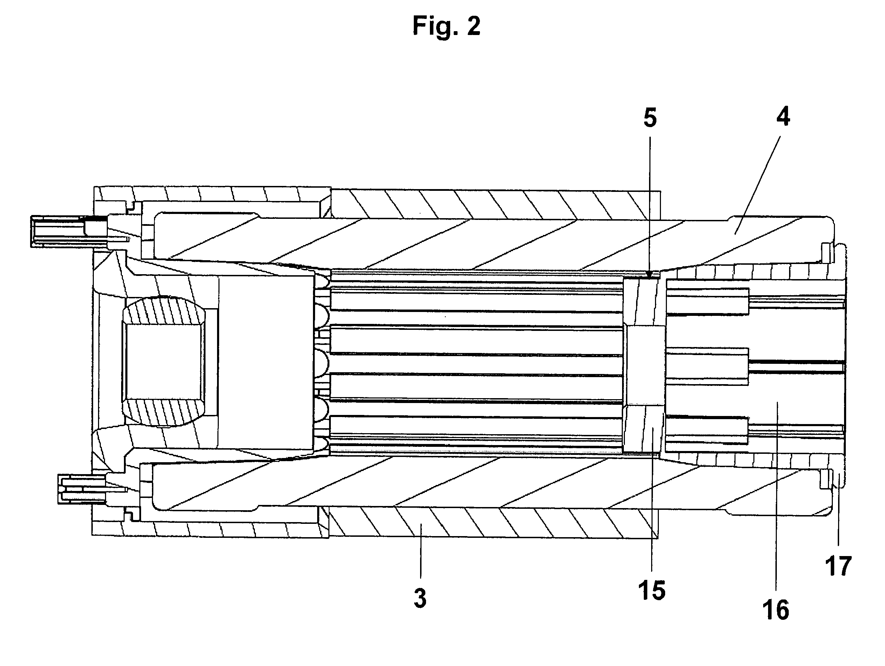

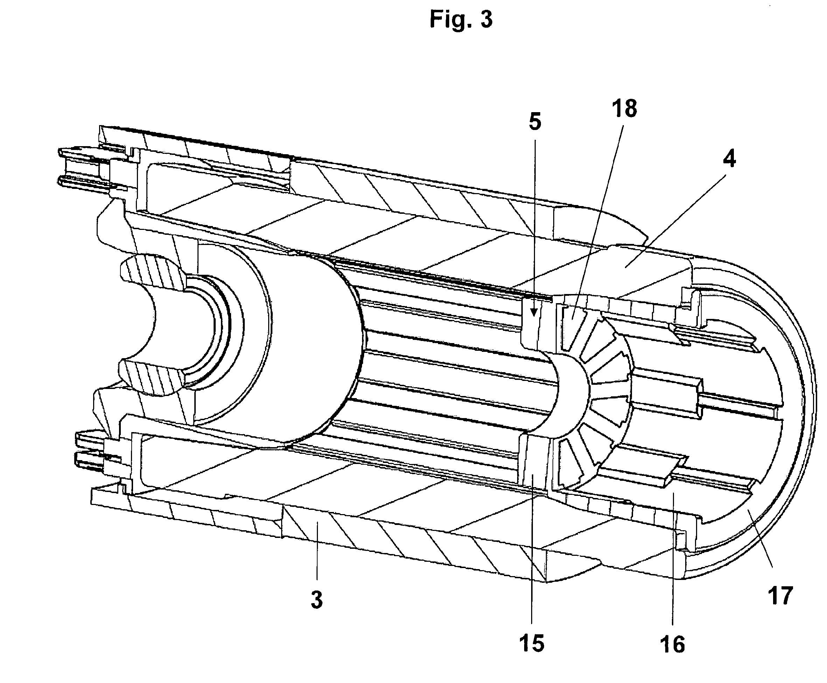

In den Figuren 2 und 3 ist die Topfform des Flussumlenkteils 5 besser erkennbar. Der Topfboden 15 ist im Stator 2 eingepresst, während die Topfwand 16 und der Topfrand 17 sich an die Wicklung 4 anschließen.

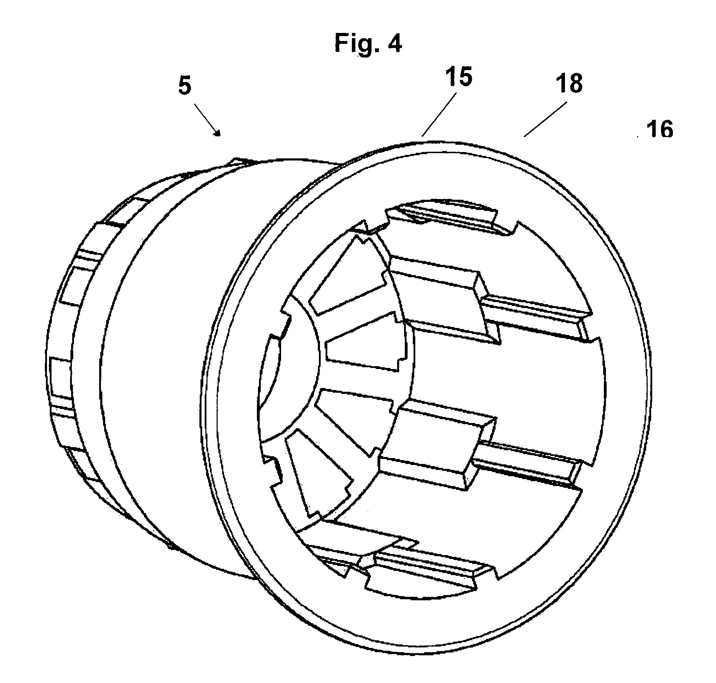

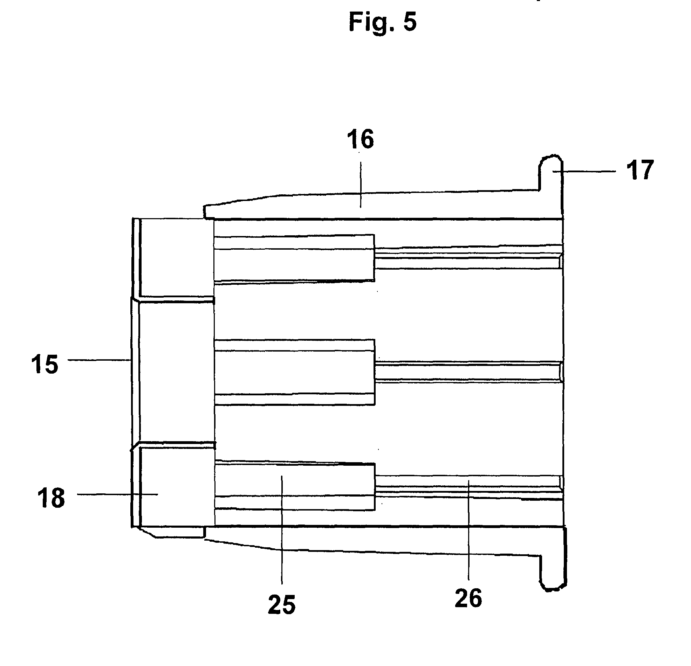

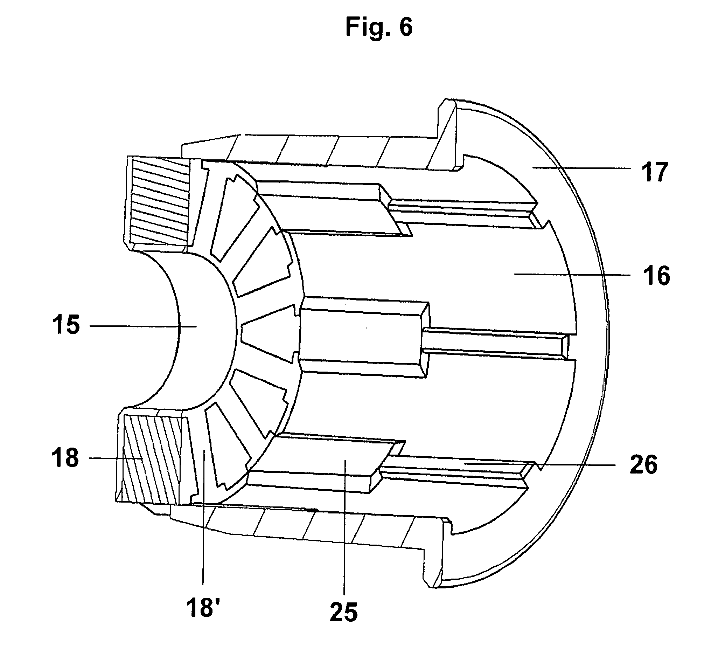

In den Figuren 4 bis 6 ist der Aufbau des Flussumlenkteils 5 besser erkennbar. Der Topfboden 15 weist eine Anzahl ringförmig angeordneter, ferromagnetischer Segmente 18 auf, die mit Kunststoff 18' vergossen sind, wobei der Kunststoff gleichzeitig die Topfwand 16 und den Topfrand 17 bildet. In diesen Figuren ist auch erkennbar, dass der Topf 15, 16, 17 des Flussumlenkteils 5 um seine Innenwand verteilte, in Motorlängsrichtung laufende Führungsrippen 25, 26 aufweist. Der Anzugskörper 7 und der Bremskörper 9 sind mit entsprechenden Führungsnuten 23 versehen.

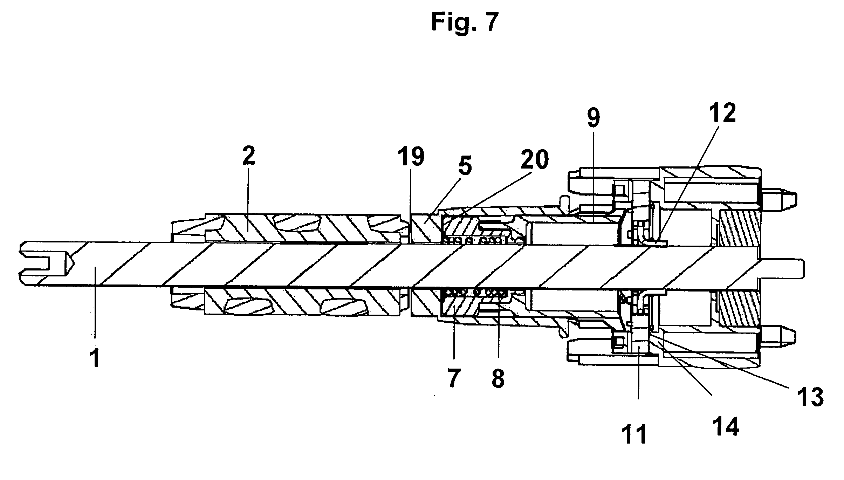

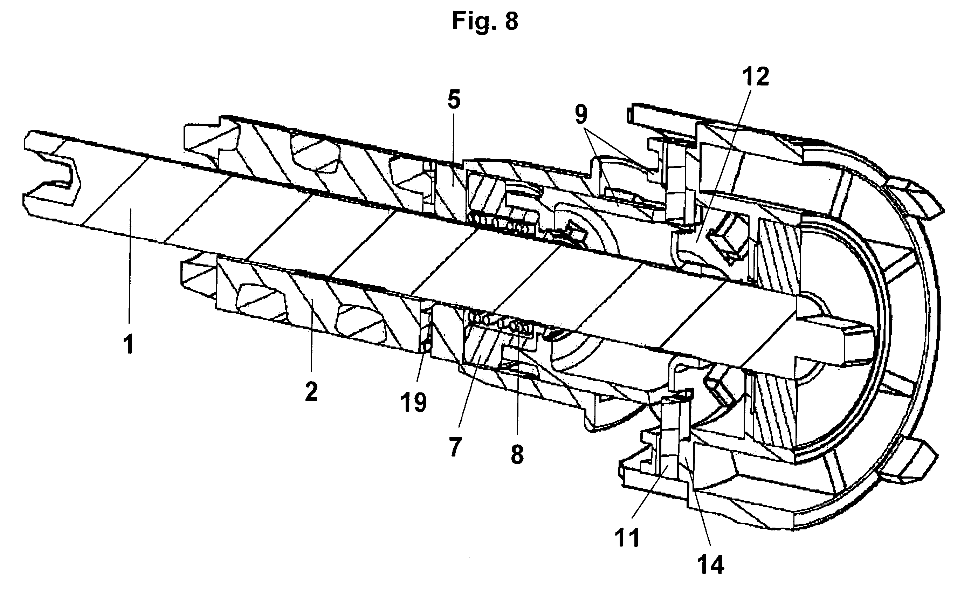

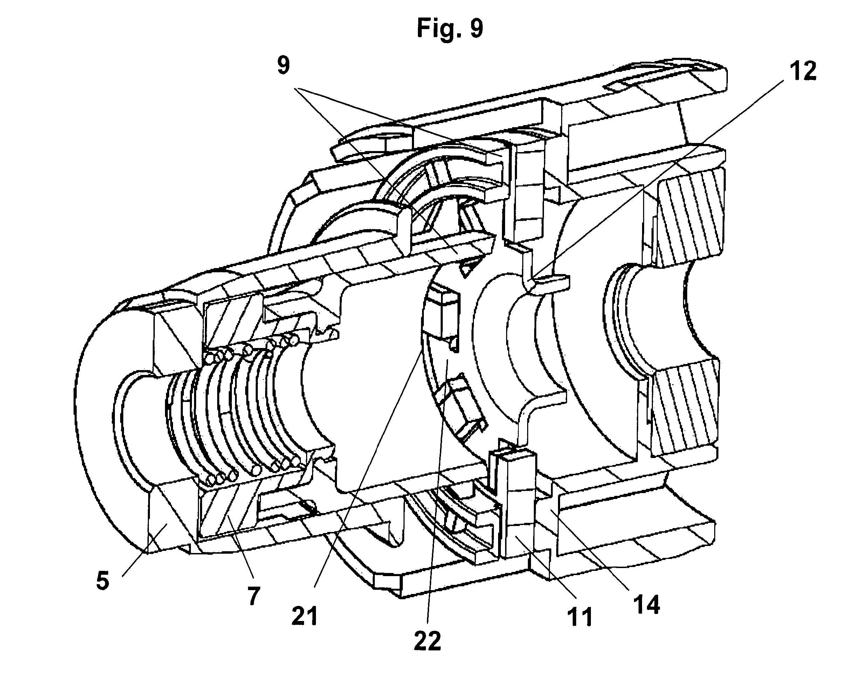

In den Figuren 7 bis 9 ist deutlich ein erster Spalt 19 zwischen dem Flussumlenkteil 5 und dem Rotor 2 zu erkennen. Ferner ist ein zweiter Spalt 20 zwischen dem Anzugskörper 7 und dem Flussumlenkteil 5 zu sehen. In diesem Fall ist die Wicklung ausgeschaltet, so dass der Bremskörper 9 mittels der Federkraft der Schraubenfeder 8 an den Bremsbelag 11 und dieser an die zweite Bremsfläche 13 des Bremsteils 14 gedrückt wird. Damit wird eine Bremswirkung erzielt, so dass die Motorwelle 1 und der Rotor 2 keine Drehung mehr ausführen können.

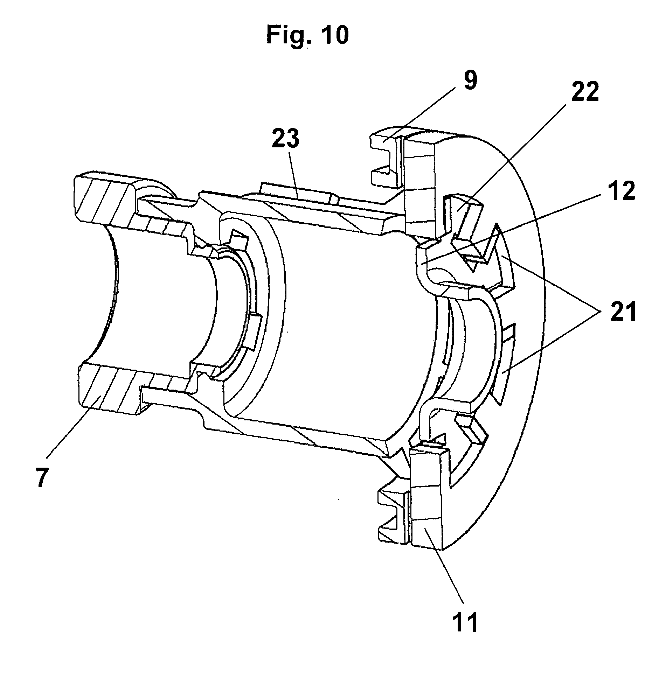

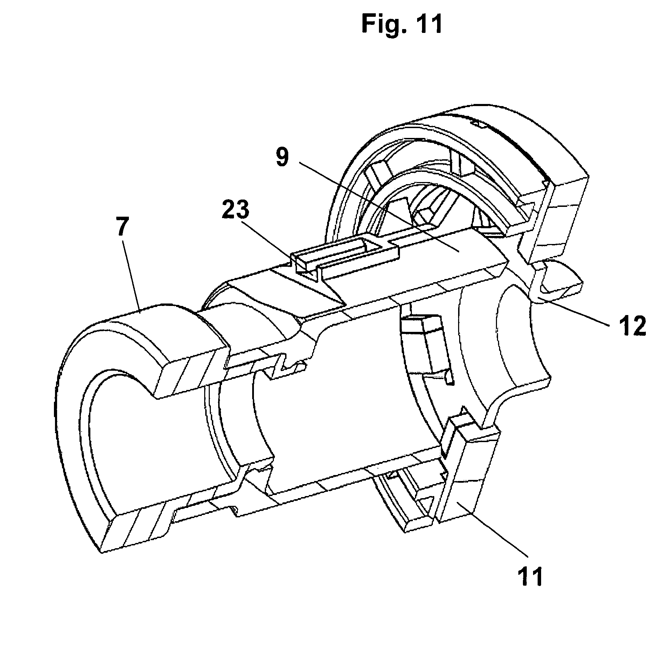

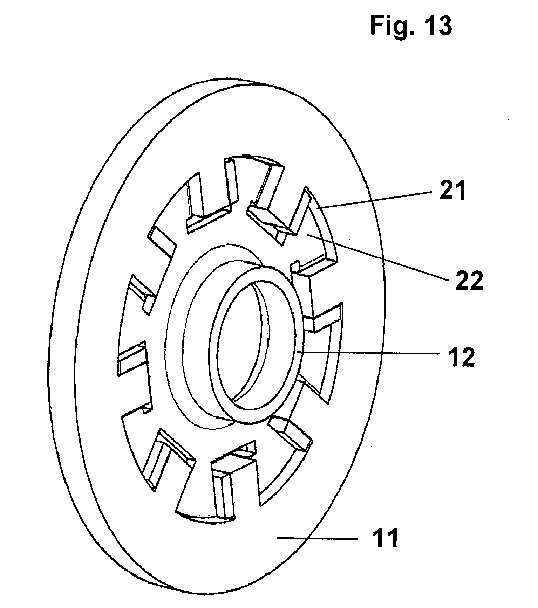

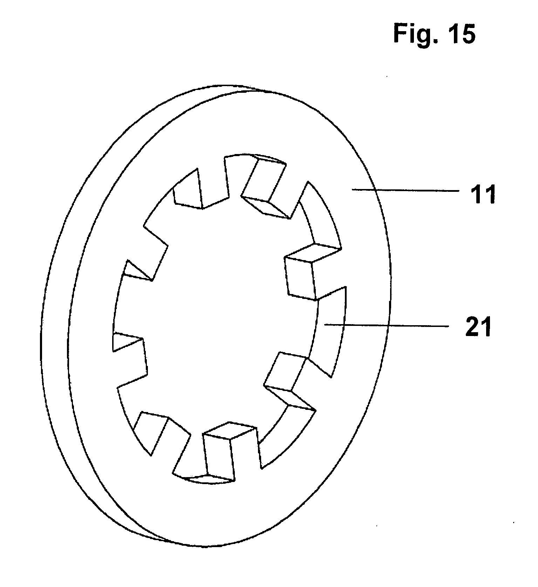

In den Figuren 10-15 ist der Aufbau der Bremseinheit nochmals verdeutlicht. Deutlich ist die komplementäre Verbindung zwischen dem Bremsbelagträger 12 und dem Bremsbelag 11 zu sehen. Der Bremsbelag 11 ist durch einen Belagring gebildet, der eine Anzahl von Ausnehmungen 21 aufweist, die vom Innenumfang des Belagrings radial ausgehen und über diesen Innenumfang verteilt sind. In diese Ausnehmungen 21 greifen komplementäre Lappen 22 des Bremsbelagträgers 12 ein, so dass der Bremsbelag 11 im Bremsbelagträger 12 schwimmend gelagert ist.

Am Bremskörper 9 sind über den Außenumfang verteilte Führungsnuten 23 vorgesehen, die in die komplementäre Führungsrippen 25, 26 eingreifen und somit eine Drehbewegung des Bremskörpers 9 verhindern. Diese Führungsnuten 23 sind beispielsweise mit Silikonfett gefüllt, wodurch nur eine gedämpfte, leicht verzögerte, axiale Verschiebung des Bremskörpers 9 zugelassen wird.

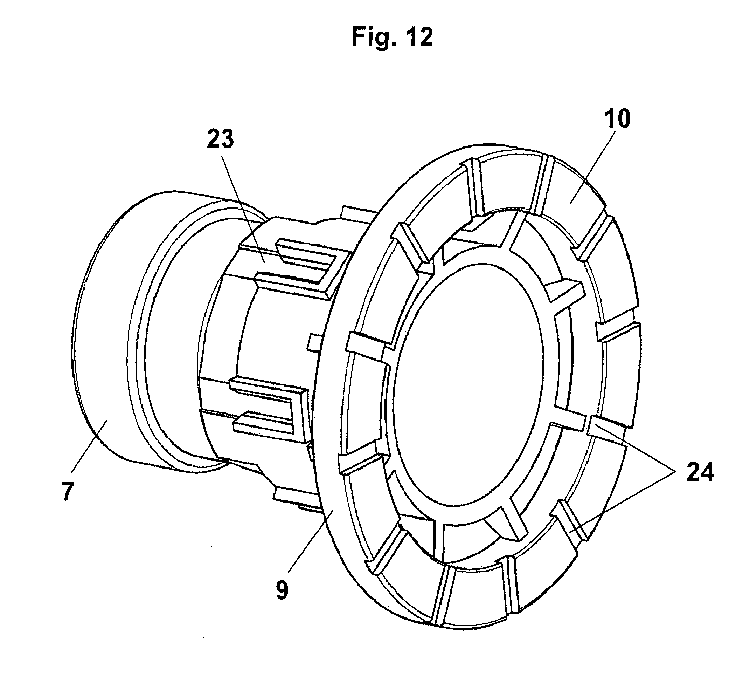

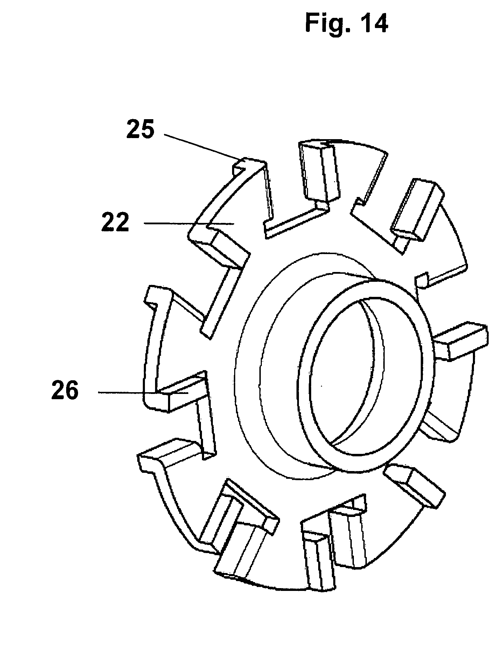

Aus Fig. 12 ist ersichtlich, dass die erste Bremsfläche 10 des Bremskörpers 9 eine Anzahl verteilter Radialnuten 24 aufweist, die den Belagabrieb aufnehmen. Aus Fig. 14 ist ferner die genaue Form der Lappen 22 zu entnehmen, die jeweils mit entgegengesetzten Winkelstücken 25, 26 versehen sind. Diese Winkelstücke bilden die Führung für den Bremsbelag 11.

Ein weiteres Flussumlenkteil mit Bremseinheit, die der vorbeschriebenen Anordnung entspricht, kann auch am anderen Rotorende vorgesehen sein.

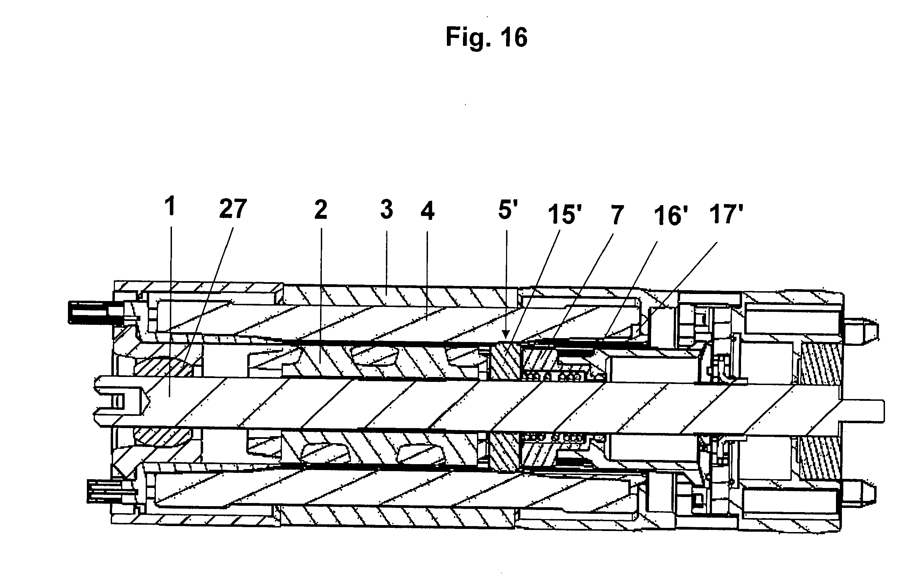

In den Figuren 16-19 ist eine alternative Lösung für die Gestaltung des Flussumlenkteils angegeben.

Bei der vorbeschriebenen Lösung kann das Flussumlenkteil 5 erst nach dem Einfügen des Rotors 2 mit Motorwelle 1 in den Stator 3 eingefügt werden. Die Bildung einer Einheit des Flussumlenkteils mit dem Stator ist deshalb umständlich. Besser ist daher, den Topfboden 15' von der Topfwand 16' zu trennen.

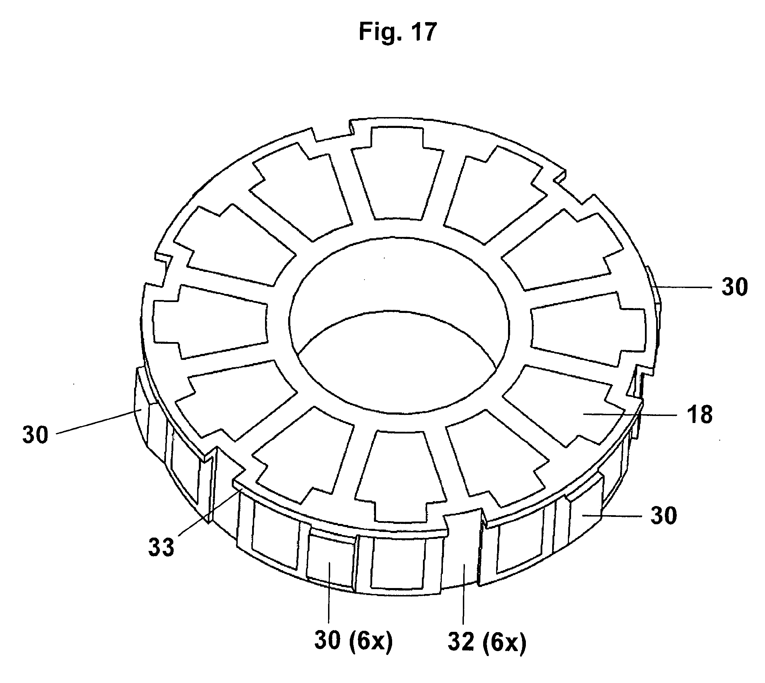

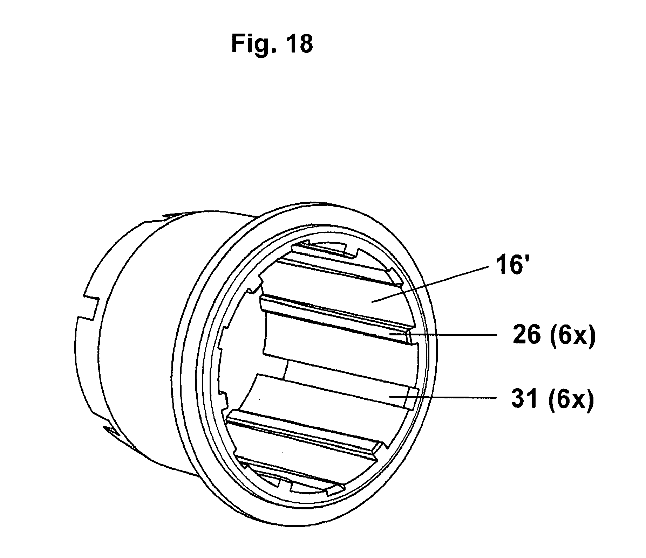

In den Figuren 17, 18 ist eine dementsprechende Ausführung des Topfbodens 15' und der Topfwand 16' dargestellt. Der mit den magnetisch leitenden Segmenten 18 ausgestattete Topfboden 15' weist einen Bund 33 und sechs auf seinem Umfang verteilte, in Motorlängsrichtung verlaufende Topfbodenrippen 30 und sechs Topfbodennuten 32 auf. Im Innem der Topfwand 16' sind sechs in Motorlängsrichtung verlaufende Topfwandnuten 31 neben den sechs vorbeschriebenen Führungsrippen 26 angeordnet.

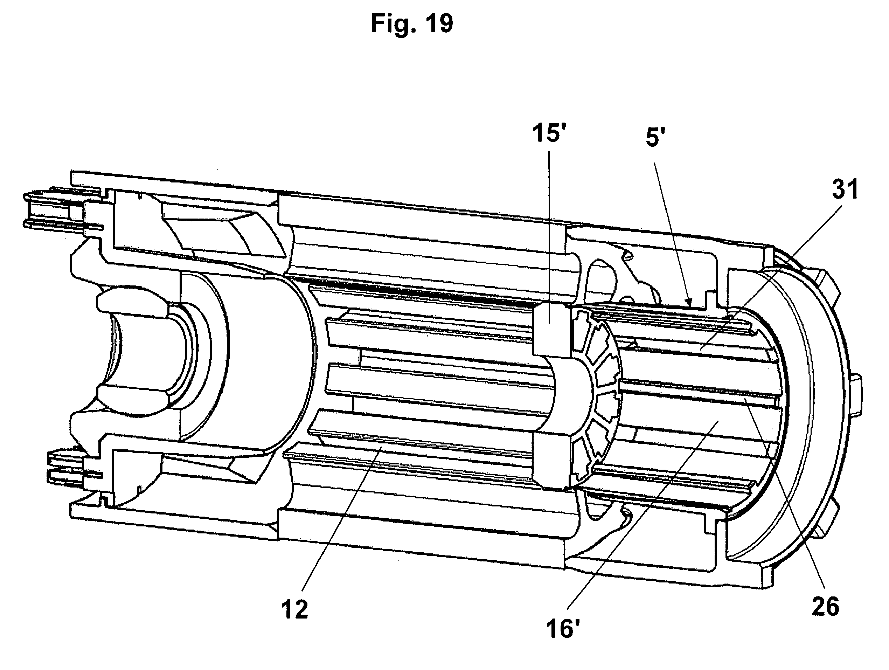

Aus den Figuren 16 und 19 ist die Lage des Topfbodens 15' am Ende der Topfwand 16' deutlich erkennbar, wobei der Topfboden 15' mittels einer Rastverbindung an der Topfwand 16' und an der Wicklung 4 befestigt ist. Die Fig. 16 ist im Übrigen wie Fig. 1 ausgebildet.

Der Montageablauf ist folgender. Der Stator 3 wird bewickelt. Anschließend wird die Topfwand 16' mit dem Topfrand 17' axial aufgesteckt, ebenso das Lager 27 mit den nicht näher bezeichneten Kunststoffteilen. Danach wird die Wicklung 4 verbacken. Damit ist der Stator 3 als Baugruppe fertig.

Die Motorwelle 1 wird dann mitsamt dem Rotor 2 axial in den Stator 3 und in das Lager 27 eingeschoben. Danach wird der Topfboden 15' axial durch den inneren Bereich der Topfwand 16' hindurchgeschoben. Dabei sind die Topfwandnuten 31 so bemessen, dass die Topfbodenrippen 30 bei der axialen Montage frei hindurchtauchen können. Ebenso sind die Topfbodennuten 32 so bemessen, dass die Führungsrippen 26 bei der axialen Montage frei hindurchtauchen können.

Die bestimmungsgemäße Endposition des Topfbodens 15' ist erreicht, sobald die Topfbodenrippen 30 in den Statomuten 29 eingetaucht sind und der Bund 33 an der stirnseitigen Fläche des Statorblechpakets anliegt. Somit ist das Flussumlenkteil 5' drehfest mit dem Stator 3 verbunden und damit stillstehend. Die Führungsrippen 26 dienen zur Führung des Bremskörpers 9 über die Führungsnuten 23. Damit ist der Bremskörper 9 axial verschiebbar, kann sich aber nicht drehen.

## Patentansprüche

1. Elektrische Antriebsvorrichtung mit einer Motorbremse, die einen Stator (3) mit einer ein elektromagnetisches Feld erzeugenden Feldwicklung (4), einen Rotor (2), der im stromlosen Zustand der Feldwicklung (4) gebremst wird, mindestens ein Flussumlenkteil (5) sowie einen Anzugskörper (7) aufweist, insbesondere für den Antrieb einer Wickelwelle eines Rollladens, einer Markise, einer Jalousie oder dergleichen,
**dadurch gekennzeichnet,**
**dass** das Flussumlenkteil (5,5') vom Rotor (2) gelöst und drehfest an einem stillstehende Antriebsteil (3) angebracht ist.

2. Antriebsvorrichtung nach Anspruch 1,
**dadurch gekennzeichnet,**
**dass** das Flussumlenkteil (5, 5') am Stator (3) oder nahe des Stators (3) angebracht ist.

3. Antriebsvorrichtung nach Anspruch 2,
**dadurch gekennzeichnet,**
**dass** Flussumlenkteil (5,5') ganz innerhalb oder teilweise innerhalb des Statorendes oder zumindest unmittelbar benachbart zum Statorende axial derart positioniert ist, dass es noch ausreichend vom Statorfeld durchflossen wird, um die gewünschte Anzugskraft zu erzeugen.

4. Antriebsvorrichtung nach Anspruch 2 oder 3,
**dadurch gekennzeichnet,**
**dass** das Flussumlenkteil (5. 5') im Stator (3) integriert ist, also ein einheitliches Bauteil mit dem Stator (3) bildet.

5. Antriebsvorrichtung nach einem der Ansprüche 2 bis 4,
**dadurch gekennzeichnet,**
**dass** das Flussumlenkteil (5) die Form eines Topfes (15, 16, 17) aufweist.

6. Antriebsvorrichtung nach Anspruch 5,
**dadurch gekennzeichnet,**
**dass** das Flussumlenkteil (5') aus einer Topfwand (16') und einem davon getrennten Topfboden (15') besteht, der in der Topfwand (16') befestigbar ist.

7. Antriebsvorrichtung nach Anspruch 6,
**dadurch gekennzeichnet,**
**dass** die Topfwand (16') innen in Motorlängsrichtung verlaufende Topfwandnuten (31) und der Topfboden (15') darauf abgestimmte Topfbodenrippen (30) aufweist und dass die Befestigung des Topfbodens (16') durch eine Rastverbindung gebildet ist.

8. Antriebsvorrichtung nach einem der Ansprüche 1 bis 7,
**dadurch gekennzeichnet,**
**dass** der Bremsbelagträger (12) mit der Motorwelle (1) fest verbunden ist.

9. Antriebsvorrichtung nach Anspruch 8,
**dadurch gekennzeichnet,**
**dass** der Anzugskörper (7) drehfest um die Motorwelle (1) im Topf des Flussumlenkteils (5), aber axial verschiebbar angeordnet ist und dass eine um die Motorwelle (1) im Anzugskörper (7) angeordnete Bremsfeder (8) den Anzugskörper (7) nach dem Abschalten des Statormagnetfelds vom Flussumlenkteil (5) abdrückt und damit einen fest mit dem Anzugskörper (7) verbundenen Bremskörper (9) auf den Bremsbelag (11) drückt.

10. Antriebsvorrichtung nach Anspruch 9,
**dadurch gekennzeichnet,**
**dass** der Topf (15,16,17) des Flussumlenkteils (5) um seine Innenwand verteilte, in Motorlängsrichtung laufende Führungsrippen (25, 26) aufweist und dass der Anzugskörper (7) und der Bremskörper (9) mit entsprechenden Führungsnuten (23) versehen sind.

11. Antriebsvorrichtung nach Anspruch 9 oder 10,
**dadurch gekennzeichnet,**
**dass** der Bremskörper (9) mit einem Dämpfungssystem versehen ist, das die durch die Bremsfeder (8) beim Bremsvorgang erzeugte, schnelle Bewegung des Bremskörpers (9) in Richtung Bremsbelag (11) und Bremsteil (14) verlangsamt.

12. Antriebsvorrichtung nach Anspruch 11,
**dadurch gekennzeichnet,**
**dass** zwischen den Führungsnuten (23) des Bremskörpers (9) und den Führungsrippen (26) Silikonfett oder dergl. eingebracht ist.

13. Antriebsvorrichtung nach einem der Ansprüche 9 bis 12,
**dadurch gekennzeichnet,**
**dass** der Bremskörper (9) mittels einer ersten Bremsfläche (10) den Bremsbelag (11) auf eine zweite Bremsfläche (13) eines an der Antriebsvorrichtung festsitzenden Bremsteils (14) drückt.

14. Antriebsvorrichtung nach einem der Ansprüche 1 bis 13,
**dadurch gekennzeichnet,**
**dass** der Bremsbelag (11) einteilig oder mehrteilig auf dem Bremsbelagträger (12) schwimmend gelagert ist.

15. Antriebsvorrichtung nach Anspruch 14,
**dadurch gekennzeichnet,**
**dass** der Bremsbelag (11) als Ring ausgebildet ist und vom Ringinnenumfang ausgehende, auf dem Ringinnenumfang verteilte Ausnehmungen (21) aufweist und dass der Bremsbelagträger (12) mit zu den Ausnehmungen komplementäre Lappen (22) versehen ist, die in die Ausnehmungen (21) eingreifen, so dass der Bremsbelag (11) schwimmend gelagert ist.

16. Antriebsvorrichtung nach einem der Ansprüche 8 bis 15
**dadurch gekennzeichnet,**
**dass** ein nach einem der Ansprüchen 1-14 ausgebildetes Flussumlenkteil mit Motorbremse auch am anderen Rotorende vorgesehen ist.

17. Flussumlenkteil (5) für eine elektrische Antriebsvorrichtung nach einem der Ansprüche 1 bis 16.

18. Flussumlenkteil (5, 5') für eine elektrische Antriebsvorrichtung mit einem Stator, einem auf einer Motorwelle angeordneten Rotor und einem Anzugskörper, **dadurch gekennzeichnet,**
**dass** das den Anzugskörper mittels des Statorfelds anziehende Flussumlenkteil (5, 5') vom Rotor (2) gelöst und drehfest an einem stillstehenden Antriebsteil (3) angebracht ist.
